# EUROPEAN PATENT APPLICATION

(11) **EP 1 143 352 A2**
(43) Date of publication of application: **10.10.2001**
(21) Application number: 01302196.9
(22) Date of filing: 09.03.2001
(51) Int. Cl.: G06F 17/30

(54) **Scalable media index system for displaying multiple "live media index menus" on a web clients browser with no additional software or plug-ins**

(30) Priority: 09.03.2000 US 188602 P; 07.08.2000 US 633201
(71) Applicant: Ateon Networks, Inc., Fremont, California 94538-6431 (US)
(72) Inventor: Chen, Ben W., Fremont, California 94539 (US)
(74) Representative: Brookes Batchellor

(57) **Abstract**

A method and system for providing a live media index menu including media content in real-time on a web client is disclosed. In one embodiment, the media content resides on at least one media source. In one aspect, the method and system include providing a layout for the live media index menu to the web client and providing the media content to the browser of the web client for display in the layout for the live media index menu. In another aspect, the method and system include requesting the live media index menu using the web client, receiving a layout for the live media index menu on the web client, receiving the media content on the web client, and displaying the media content in the layout for the live media index menu. In another aspect, the method and system register a live media source server for providing media content for a live media index menu. In this aspect, the method and system include allowing a live media source server to access a live media index server and adding the live media source server to a database if the live media source has not previously been added to the database.

## Description

### CROSS-REFERENCE TO RELATED APPLICATIONS

The present application is related to co-pending U.S. Patent Application Serial No. (1664P), entitled "ADAPTIVE MEDIA STREAMING SERVER FOR PLAYING LIVE AND STREAMING MEDIA CONTENT ON DEMAND THROUGH WEB CLIENT'S BROWSER WITH NO ADDITIONAL SOFTWARE OR PLUG-INS" filed on and assigned to the assignee of the present invention.

### FIELD OF THE INVENTION

The present invention relates to computer systems, and more particularly to a method and system for allowing media, such as live or streaming media, to be provided in a scalable media index system that can play media index menus on a computer system.

### BACKGROUND OF THE INVENTION

Currently, many products and services are available to users via the Internet or a local area network (LAN). For example, users often wish to view media content, such as audio or video, via web clients over the Internet or a LAN. The web clients are typically computer systems that are equipped with a virtual machine, typically incorporated into a conventional browser. Web clients might, for example, include a cell phone, personal digital assistant (PDA), Web pad, personal computer, workstation or other device that can connect to the LAN or Internet.

Conventional browsers are used for many functions and are capable of playing certain types of content. For example, web clients typically connect to the Internet or LAN using a browser and allow a user to view content on the browser. Conventional virtual machines in browsers are typically JAVA™ virtual machines. For example, conventional browsers are typically capable of receiving, decompressing and displaying, or playing, JPEG image. Conventional browsers are also capable of using GIF file formats. Thus, conventional browsers are typically capable of playing certain types of audio and static image data.

In order to select the items, such as media content to be played or other products and services, users may view items in a media index menu. A media index menu is used to allow the user to determine what items are available for selection. Thus, the media index menu is typically provided to the conventional browser via the Internet or LAN from an external source. The browser displays the media index menu. The user then employs the conventional media index menu to select one or more desired items.

Conventional media index menus can typically fall into one of two categories. The first category attempts to display the items as media content in real-time in the conventional media index menu. Such a media index menu will be termed a live media index menu. Thus, the first category includes live media index menus. This type of conventional live media index menu requires a dedicated web server to be set up to accept a constant upload from each individual server that provides the media content. The conventional live media index menu has certain limitations and drawbacks. In particular, this type of conventional live media index menu requires a dedicated web server to be set up to accept a constant upload from each individual server that provides the media content. Thus, the dedicated web server must constantly accept the media content to be played in the windows of the conventional live media index menu displayed on a web client. One of ordinary skill in the art will realize that the most significant drawbacks of this type of conventional live media index menu are the resulting waste of bandwidth and the latency. Because this conventional media index menu requires a constant upload, bandwidth is wasted. Moreover, there is a significant upload latency, which results in poor performance of the conventional live media index menu. In other words, the upload latency makes it practically impossible to provide real-time media content with this type of conventional live media index menu.

The second category of conventional media index menus includes static and one-dimensional menus that follow a top-down traversing approach. Thus, the media index menu is often laid out in a one-dimensional manner, as discussed below. This makes the conventional media index menu difficult and frustrating to use. Such conventional media index menus often appear on a web portal, which is a web site or service that offers a broad array or resources and services, such as e-mail, forums, search engines, on-line shopping malls and other services. Such a conventional media index menu is static and follows a top-down traversing approach. This means that the web user has to go through a static menu and traverse upward or downward, usually one item at a time, until the desired information is found. The look-up approach is one-dimensional and linear. In other words, it compels the user to view information relating to one item of the menu at a time. This approach lacks the capability of providing over-view, is time-consuming and is less effective in allowing a user of a web client to locate the desired media content.

For example, suppose a user desires to review the contents of a five hundred-channel cable subscription on a television screen in order to determine what media content to view. There are two ways of determining what is being played on one or more of the five hundred channels using a conventional remote control unit for the television. One method requires the user to press the up or down key to perform a sequential search. Such a search is very inefficient and may be extremely time consuming. Another method requires the user to key in the channel number to perform a random access of that channel number. Again, locating the desired media content may take a significant amount of time for the user. Either method is one-dimensional and frustrating to a user.

Similarly, a user may wish to look up a particular item from an auction site or a web portal such as Ebay or Yahoo through the user's web browser. Conventional systems follow a thread downward or upward until a final list of related items is found. The user would then act in a manner similar to the cable TV viewer, looking up the item by traversing the final list or keying certain items on the final list. Thus, the search for a particular item may take a significant amount of time. Again, either method is one-dimensional and frustrating.

Accordingly, what is needed is a method and system for providing a live media index menu in a more efficient manner. The present invention addresses such a need.

### SUMMARY OF THE INVENTION

The present invention provides a method and system for providing a live media index menu including media content in real-time on a web client. In one embodiment, the media content resides on at least one media source. In one aspect, the method and system comprise providing a layout for the live media index menu to the web client and providing the media content to the browser of the web client for display in the layout for the live media index menu. In one embodiment, the web client can play the media content for the live media index menu without additional software or plug-ins. In another aspect, the method and system comprise requesting the live media index menu using the web client, receiving a layout for the live media index menu on the web client, receiving the media content on the web client, and displaying the media content in the layout for the live media index menu. In another aspect, the method and system register a live media source server for providing media content for a live media index menu. In this aspect, the method and system comprise allowing a live media source to access a live media index server and adding the live media source server to a database if the live media source server has not previously been added to the database.

According to the system and method disclosed herein, the present invention provides a web client with the ability play a live media index menu including audio or video in real-time.

### BRIEF DESCRIPTION OF THE DRAWINGS

Figure 1 is a block diagram of one embodiment of a system that allows a browser for a web client to play a live media index menu including media content from multiple sources via the Internet or a network in real-time.

Figure 2A is a block diagram of one embodiment of a media index server in accordance with the present invention.

Figure 2B is a more detailed block diagram of one embodiment of a media index server in accordance with the present invention.

Figure 3A is a diagram depicting how one embodiment of a system in accordance with the present invention interacts to provide a particular live media index menu to a client.

Figure 3B is a diagram depicting how one embodiment of a system in accordance with the present invention interacts to provide live standard frame to a client.

Figure 4A is a high level block diagram of one embodiment of an adaptive media server for allowing a browser for a web client to play a live media index menu including media content from the Internet or a network in real-time without requiring additional software or plug-ins.

Figure 4B is a block diagram of one embodiment of an adaptive media server for allowing a browser for a web client to play a live media index menu including media content from the Internet or a network in real-time without requiring additional software or plug-ins.

Figure 4C is a detailed block diagram of one embodiment of an adaptive media server for allowing a browser for a web client to play a live media index menu including media content from the Internet or a network in real-time without requiring additional software or plug-ins.

Figure 5A is a block diagram of one embodiment of a web client that can play a live media index menu including media content from the Internet or a network in real-time without requiring additional software or plug-ins.

Figure 5B is a block diagram of another embodiment of a web client that can play a live media index menu including media content from the Internet or a network in real-time without requiring additional software or plug-ins.

Figure 6A is a high level flow chart of one embodiment of a method for registering media sources in accordance with the present invention.

Figure 6B is a high level flow chart of one embodiment of a method for allowing a browser of a web client to play a live media index menu in accordance with the present invention.

Figure 6C is a flow chart of one embodiment of a method for allowing a browser of a web client to play a live media index menu including media content from the Internet or a network in real-time without requiring additional software or plug-ins.

Figure 7 is a high-level flow chart of another embodiment of a method for allowing a browser of a web client to a live media index menu including play media content from the Internet or a network in real-time without requiring additional software or plug-ins.

Figure 8 is a flow chart of one embodiment of a method for ensuring that a browser of a web client can adequately flush the cache.

Figures 9A, 9B and 9C depict a more detailed flow chart of a preferred embodiment of a method for allowing a browser of a web client to play a live media index menu including media content from the Internet or a network in real-time without requiring additional software or plug-ins.

### DETAILED DESCRIPTION OF THE INVENTION

The present invention relates to an improvement in delivery of information to web clients using a media index menu. The following description is presented to enable one of ordinary skill in the art to make and use the invention and is provided in the context of a patent application and its requirements. Various modifications to the preferred embodiment will be readily apparent to those skilled in the art and the generic principles herein may be applied to other embodiments. Thus, the present invention is not intended to be limited to the embodiment shown, but is to be accorded the widest scope consistent with the principles and features described herein.

Conventional media index menus allow a user to select between items listed in the conventional media index menus. One type of conventional media index menu is a conventional live media index menu. Such a conventional media index menus provides media content relating to items in the live media index menu in real time. However, conventional live media index menus waste bandwidth and have latency issues. Anotner type of conventional media index menu is typically static and one-dimensional. Thus, the conventional media index menus require a user to traverse through the conventional media index menu, typically one item at a time. As a result, conventional media index menus are often thus frustrating to use. In addition, such conventional index menus do not provide live media content to a viewer.

The present invention provides a method and system for providing a live media index menu including media content in real-time on a web client. In one embodiment, the media content resides on at least one media source. In one aspect, the method and system comprise providing a layout for the live media index menu to the web client and providing the media content to the browser of the web client for display in the layout for the live media index menu. In one embodiment, the web client can play the media content for the live media index menu without additional software or plug-ins. In another aspect, the method and system comprise requesting the live media index menu using the web client, receiving a layout for the live media index menu on the web client, receiving the media content on the web client, and displaying the media content in the layout for the live media index menu. In another aspect, the method and system register a live media source server for providing media content for a live media index menu. In this aspect, the method and system comprise allowing a live media source server to access a live media index server and adding the live media source server to a database if the live media source server has not previously been added to the database.

The present invention will be described in terms of particular compression standards, such as JPEG, that can be decompressed and played by a browser without the installation of additional software or plug-ins. However, one of ordinary skill in the art will readily recognize that this method and system will operate effectively for other compression standards that can be decompressed and played by a browser without the installation of additional software or plug-ins. The present invention will also be described in the context of particular architectures, particular software, such as JAVA™, and particular browser types. However, one of ordinary skill in the art will readily recognize that the present invention will operate effectively for other architectures, other software and other browser types. The present invention will also be described in the context of a particular layout having windows containing media content for the live media index menu. However, one of ordinary skill in the art will recognize that the layout merely refers to the format for presenting the live media index menu. The present invention will be described in the context of a live media index menu for allowing a user to select media content. However, one of ordinary skill in the art will readily recognize that the present invention is applicable to other live media index menus for other items but which use media content in the live media index menu.

The present invention is also disclosed in the context of a system which utilizes an adaptive media streaming server as a media source to allow a client's browser to play media content for the live media index menu in real time without additional software or plug-ins. However, one of ordinary skill in the art will readily recognize that the present invention is consistent with other media sources and other servers. However, in such a case additional software might be used by the browser in order to play the media content in real time.

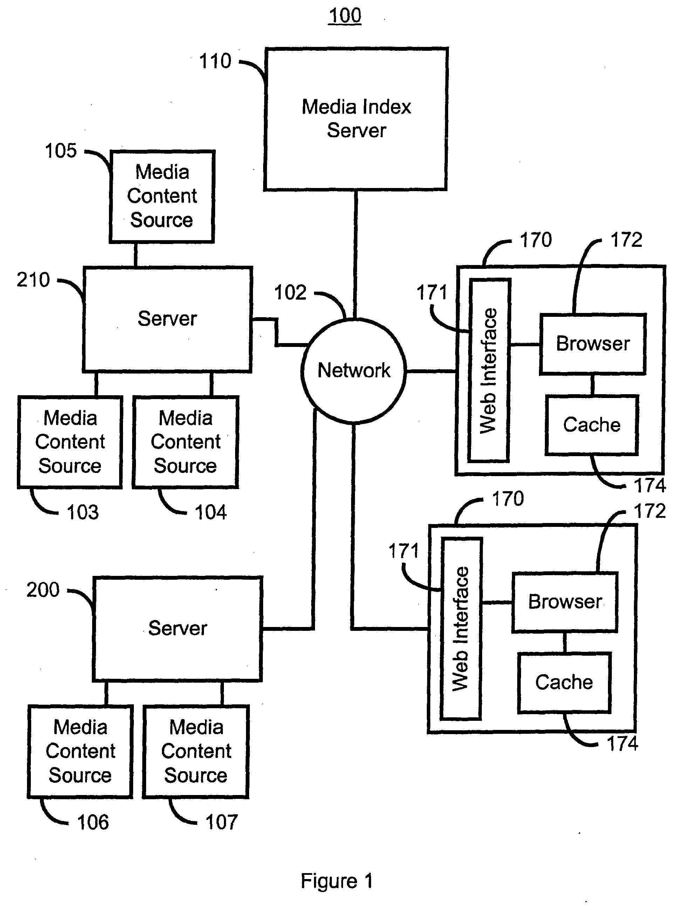

To more particularly illustrate the method and system in accordance with the present invention, refer now to Figure 1. Figure 1 depicts a preferred embodiment of a system 100 that allows a browser for a web client to play a live media index menu including media content from the Internet or a network in real-time without requiring additional software or plug-ins. The system 100 includes a media index server 110, servers 200 and 210, and web clients 170. The servers 200 and 210 may be used in providing live media content, as discussed below. Thus, the servers 200 and 210 are also termed live media source servers 200 and 210. The servers 200 and 210 are preferably adaptive media streaming (AMS) servers 200 and 210. The media index server 110, the AMS server 200 and 210 and the web clients 170 are coupled via a network 102. The network 102 could include a local area network (LAN), the Internet, or another type of network. Figure 1 depicts with the servers 200 and 210 coupled with the media index server 110 via the network 102. However, in an alternate embodiment, the servers 200 and 210 could be coupled with the media index server 110 via a LAN, a WAN or could be incorporated into the media index server 110.

The system 100 allows media content to be organized and displayed in the form of a live media index menu on the web client's browser 172. Consequently, for clarity, the present invention will be described in the context of Figure 1 and the system 100. The combination of the media index server 110 and the servers 200 and 210 allow live media content to be organized and displayed in the form of a live media index menu on the web client's browser 172.

The servers 200 and 210 are preferably the same and are preferably AMS servers. The servers 200 and 210 are server appliances that preferably includes or are coupled to a storage (not shown) and/or media content sources 103, 104 and 105 and media content sources 106 and 107, respectively. Note that although three media content sources 103, 104 and 105 are shown as coupled to the server 210 and two media content sources 106 and 107 are coupled to the server 200, nothing prevents the use of another number of media content sources. The storage (not shown) and the media content sources are sources for media content, such as audio and/or video. The server 200 or 210 allows the web client 170 to be capable of playing in real time media content that is delivered over the network 102 from the server 200 or 210.

The web client 170 is a device that can be coupled to the network 102. For example, the web client 170 may include a cell phone, a personal digital assistant (PDA), a web pad, a personal computer, a laptop computer, or a workstation. The web client 170 includes an interface 171 for coupling the web client 170 to the network 102, a browser 172, a cache 174 used by the browser 172 in displaying data and a process for displaying data on the browser 172. The browser 172 preferably implements a virtual machine, such as a JAVA™ virtual machine.

The media index server 110 communicates with the web clients 170 and the AMS servers 200 and 210. The media index server 110 includes a layout of one or more live media index menus. The media index server 110 also includes the addresses, preferably uniform resource locators (URLs), for the servers 200 and 210. The media index server 110 also communicates with the servers 200 and 210 to identify the servers 200 and 210, the addresses for the servers 200 and 210 and other information for the servers 200 and 210. Preferably, the web client 170 requests the live media index menu from the media index server 110. The media index server 110 provides the layout of the live media index menu to the web client 170 and redirects the web client 170 to the addresses of the AMS servers 200 and 210. The server 200 and 210 then provide the media content directly to the web client 170. The servers 200 and 210 preferably provide the media content to the web client 170 in a manner that allows the web client 170 to play the media content in real time without the installation of additional software or plug-ins. However, in either embodiment, the installation of additional software or plug-ins in the web client 170 is preferably not required.

Although only two servers 200 and 210 are depicted in Figure 1, any number of servers 200 and 210 could be used. Thus, the system 100 is scalable. In addition, additional software or plug-ins are no longer required on the web client 170 when the servers 200 and 210 are AMS servers. Thus, a user need not expend time and resources in installing such software or plug-ins. In certain embodiments, the live media index menu is provided to the web client 170 only on demand. Thus, less resources of the web client 170 are utilized and the bandwidth used in providing the live media index menu reduced. Furthermore, in one embodiment, the media content provided to the web client 170 can be adjusted to match the bandwidth of the individual web client 170.

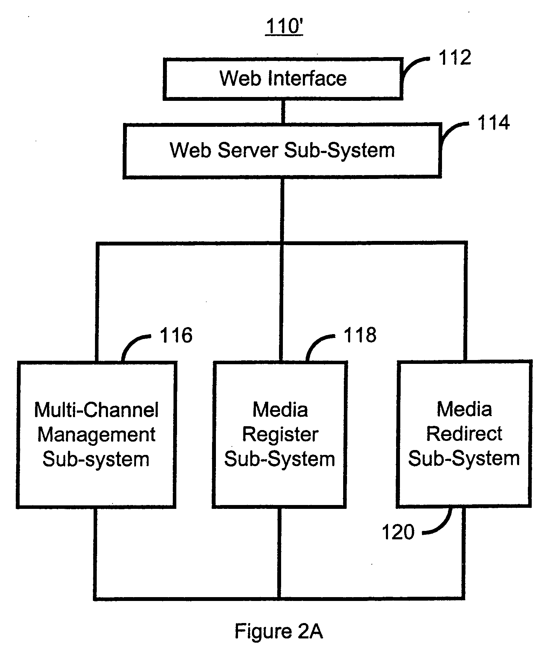

Figure 2A is a functional block diagram of one embodiment of the media index server 110' in accordance with the present invention. The media index server 110' includes a web interface 112 for communicating via the web server sub-system 114. The media index server 110' also includes a multi-channel management sub-system 116, a media register sub-system 118 and a media redirect sub-system 120. The web server sub-system 114 allows the media index server 110' to display the live media index menu based on media streaming and other information provided by live media source servers 200 and 210 via the live media redirect sub-system 120 and the multi-channel management sub-system 116. The media index server 110' could also include a security mechanism for validating users of the media index server 110'. However, in a preferred embodiment, such a security mechanism, if any, is provided in the AMS servers 200 and 210.

The media register sub-system 118 controls registration of the servers 200 and 210 as sources of media content, or live media source servers, for the media index server 110'. The live media source servers 200 and 210 can log into the media register sub-system 118 for registering as media sources for the media index server 110'. The servers 200 and 210 preferably provide the index and the standard live media URL (or IP address) to media index server 110". The media register sub-system 118 will build a database which stores the identity information of each server 200 and 210, live frame index addresses and live standard frame addresses for each server 200 and 210. A live frame index address is the URL (or IP address) for the media content played by the corresponding server 200 or 210 for a particular live frame in the media index menu which carries media content. The live frame is typically one of many live frames shown in the menu. Thus, a server 200 and 210 may have multiple live frame index addresses if the server 200 and 210, respectively, will provide more than one live frame of media content to the menu. A live standard frame address is the combination of the URL (or IP address) and the live media source index number for the live media content played by the corresponding server 200 and 210. A live standard frame is typically used when a live media source is chosen from the live media index menu. Thus, the media register sub-system 118 ensures that the media index server 110' contains the identity information of the servers 200 and 210 as well as the addresses used to obtain the media content provided by the servers 200 and 210 for the live media index menu.

For registering a live media source servers 200 or 210, the server 200 or 210 logs into the media register sub-system 118. The media register sub-system 118 checks the compatibility of the live media source server 200 or 210. If the server 200 or 210 passes the check, the media register sub-system 118 automatically locates the access address of the live media source server 200 or 210. For example, the access address may be the IP address of an server 200 or 210 on the WAN or LAN. The media register sub-system 118 then checks the database of live media index 110' to determine whether the record of this live media source server exists. If this record does not exist in the database of live media index 110', the media register sub-system 118 will add a record into the database for this live media source server (server 200 or 210). If the record exists, a maintenance menu of the media register sub-system 118 will be called. The maintenance menu provides previewing, removing, modifying, disable and enable functions to the live media source servers which have previously logged into the media register sub-system 118. The owner of the live media source server, such as the server 200 or 210, can preview the live media content to be played on client browser 172 via preview function. The owner of live media source server, or server 200 or 210, can use the removing function if the record of this live media source server, or server 200 or 210, respectively, is to be removed from the database of media index server 110'. The owner of live media source AMS server 200 or 210 can use the modifying function if some identity information of this live media source server 200 or 210, respectively, is to be modified. The owner of live media source server 200 or 210 can also use disable function if this live media source server 200 or 210, respectively, is to be masked temporarily on the network. The owner of the live media source server 200 or 210 also can use the enable function if this live media source server 200 or 210, respectively is to be launched again on the network.

Based on the database which built by media register sub-system 118, the multi-channel management sub-system 116 can dynamically define the live media index menu, preferably in some sort of page format. Thus, the multi-channel management sub-system 116 can provide a layout for the live media index menu. Utilizing the attributes the media index server 110' has received from the media source servers 200 and 210 via media register sub-system 118, the live media index server 110' lists all of the live media sources in an index for the menu via the multi-channel management sub-system 116. When the live media source server 200 or 210 provides media content to be displayed in separate live frames, the media content from each of the media source servers 200 and 210 is preferably listed separately in the index, as well as being displayed in separate live frames on the menu. Thus, the client browser 172 can be used to preview the media live index menu. The database of media index server 110' will provide these live media source's standard URLs (or IP addresses) which are registered. By using these URLs (or IP addresses), client browser 172 can play all of the media content live for each channel, thereby allowing the user to select between channels. Preferably, the client browser 172 will access the media live index server 110' and these live media source servers 200 and 210 at the same time.

Depending on the administrator's preferences for the media index server 110', these live media source servers may be classified according to live media type, live media source location, live media source content, and other criteria via the multi-channel management sub-system 116. The multi-channel management sub-system 116 provides a management interface (not shown) via web server sub-system 114. The administrator may use the management interface to re-organize types of live media source servers in the database of the media index server 110'. At the same time, the administrator can apply, remove, modify, enable or disable the access address and other identity information of these live media source servers which are recorded in the database of the media index server 110' via multi-channel management sub-system 116. If desired, the administrator can add directly a new live media source server record into the database of media index server 110' via the applying function. Thus, any good live media source server may be added to the media index menu by the administrator of the media index server 110'. Of course, the administrator may also remove media sources, such as the servers 200 and 210, from the media index server 110'. For example, if any poor or harmful live media source server is found, the administrator can remove it from the database of media index server 110'. If any incorrect identity information of live media source server is found, the administrator can manually modify the record of this live media source server in the database of media index server 110'. For any reason, the administrator can disable the access address of any live media source server 200 or 210 or enable the access address of any live media source server 200 or 210.

The media redirect sub-system 120 controls redirection of communication between the servers 200 and 210 and the web client 170. The media redirect sub-system 120 controls dynamic regeneration of the addresses for the live index frame or the live standard frame from each of the servers 200 and 210. Thus, the media redirect sub-system 120 allows portions of the communication between the web client 170 and the media index server 110' to be redirect to the appropriate servers 200 and 210 in order for the servers 200 and 210 to provide media content directly to the appropriate live index frame or live standard frame in the live media index menu being displayed on the web client 170.

The media index server 110' also communicates with and receives relevant information, including access addresses, from the servers 200 and 210 using the media register sub-system 118. The web server sub-system 114 allows the media index server 110' to display the live media index menu and media content from the servers 200 and 210. The media index server 110' redirects communication between the web client 170 and the servers 200 and 210 using the addresses of the servers 200 and 210 so that the web client 170 can receive media content for the live media index menu directly from the servers 200 and 210.

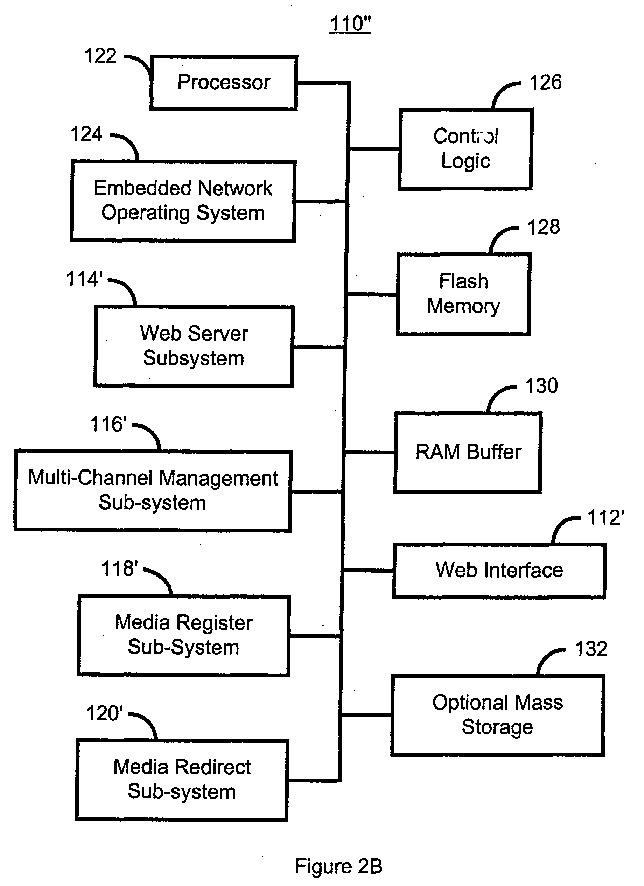

Figure 2B depicts a block diagram of one embodiment of a media index server 110" in accordance with the present invention. The media index server 110" includes a web interface 112', a web servers sub-system 114', a multi-channel management sub-system 116', a media register sub-system 118' and a media redirect sub-system 120' that are analogous to the web interface 112, the web servers subsystem 114, the multi-channel management sub-system 116, the media register sub-system 118 and the media redirect sub-system 120 depicted in Figure 2A. Referring back to Figure 2B, the media index server 110" also includes a processor 122, control logic 126, an embedded network operating system 124, a flash memory 128, a random access memory (RAM) buffer 130 and an optional mass storage 132.

The media index server 110" can perform essentially the same functions as the media index servers 110 and 110'. The media index server 110" communicates with and receives relevant information, including access addresses and other identity information, from the servers 200 and 210 using the media register sub-system 118' and web server sub-system 114'. The media index server 110" also communicates with web clients 170 using the multi-channel management sub-system 116' and media redirect sub-system 120'. The web server sub-system 114' allows the media index server 110" to display the live media index menu which organized by multi-channel management sub-system 116' and the live media streaming from the servers 200 and 210. The media index server 110" also redirects communication between the web client 170 and the servers 200 and 210 using the access addresses of the servers 200 and 210 so that the web client 170 can receive media content for the live media index menu directly from the servers 200 and 210.

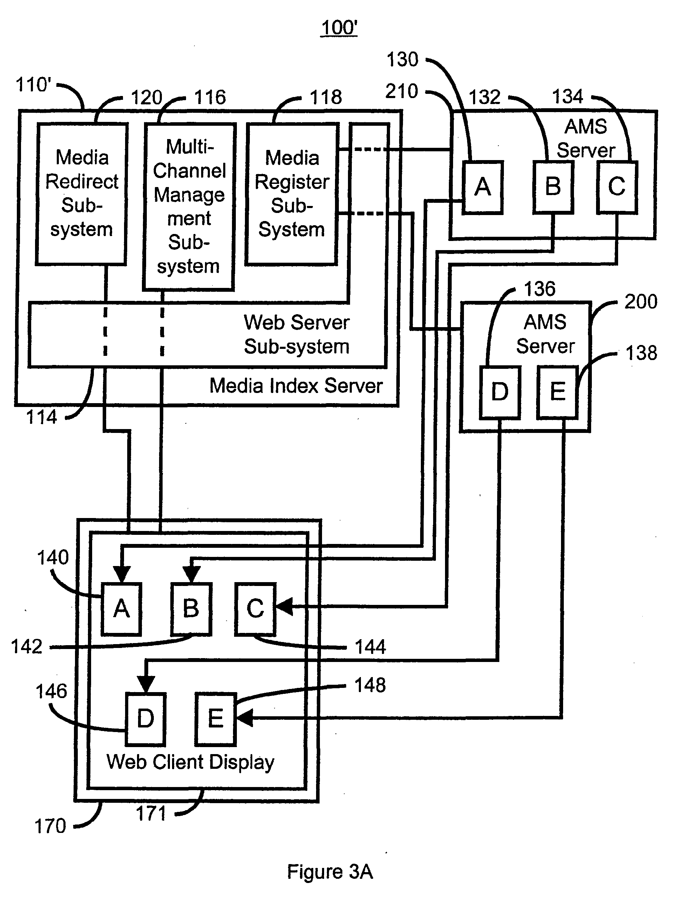

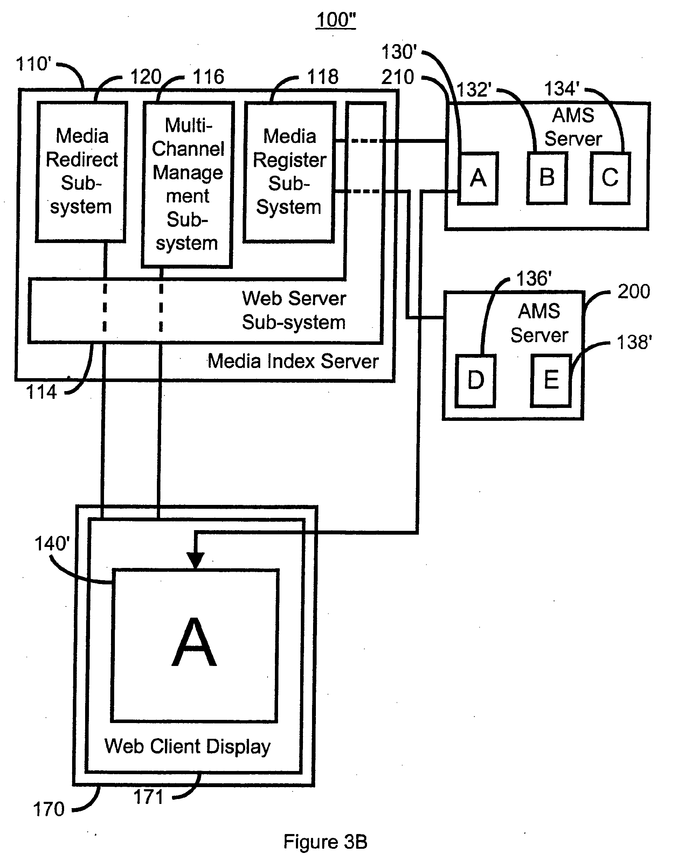

Figures 3A and 3B depict systems 100' and 100". Figure 3A is a diagram depicting how one embodiment of a system 100' in accordance with the present invention interacts to provide a particular live media index menu to a client 170. Figure 3B is a diagram depicting how one embodiment of a system 100" in accordance with the present invention interacts to provide a live standard index frame to a client 170. Figures 3A and 3B depict the media sources, or servers 200 and 210, as AMS servers 200 and 210. However, the systems 100' and 100' can use other servers or media sources in lieu of or in addition to the AMS servers 200 and 210.

Referring to Figure 3A, the system 100' includes a media index server 110', AMS servers 200 and 210 and a web client 170. For clarity, only a portion of the system 100' and the media index server 110', the live media source AMS servers 200 and 210 and the web client 170 are depicted. The web client 170 includes a display 171, which is depicted as showing a live media index menu having live index frames 140, 142, 144, 146 and 148. Based on web server sub-system 114, the web client 170 has communicated with the media index server 110' via the multi-channel management sub-system 116 and media redirect sub-system 120, and the live media source AMS servers 200 and 210 communicates with the media index server 110' via the media register sub-system 118.

The AMS servers 200 and 210 include media content 130, 132 and 134 and media content 136 and 138, respectively. Preferably, the media content 130, 132, 134, 136 and 138 comes from media content sources 103, 104, 105, 106 and 107 (not shown), respectively. However, nothing prevents the media content 130, 132, 134, 136 and 138 from being provided by another source. Because of the media redirect sub-system 120, the AMS servers 200 and 210 communicate directly with the web client 170. The AMS servers 200 and 210 can thus provide media content 130, 132, 134, 136 and 138 to the live index frames 140, 142, 144, 146 and 148, respectively. The AMS servers 200 and 210 provide the media content 130, 132, 134, 136 and 138 to the web client 170 without requiring the web client 170 to have additional software or plug-ins installed. The layout of the live media index menu, including the positions of the live index frames 140, 142, 144, 146 and 148. Thus, the system 100' can allow the web client 170 to display a menu through the media index server 110' and AMS servers 200 and 210.

Referring to Figure 3B, the system 100" includes a media index server 110', AMS servers 200 and 210 and a web client 170. For clarity, only a portion of the system 100" and the media index server 110', the AMS servers 200 and 210 and the web client 170 are depicted. For example, the network 102 and the web interface 112 of the media index server 110' are not shown. The web client 170 includes a display 171 which is depicted as showing a live media index menu having a live standard index frame 140'. The web client 170 has communicated with the media index server 110' via the multi-channel management sub-system 116 and the media redirect sub-system 120. The media index server 110' communicates with the AMS servers 200 and 210 via the media register sub-system 118.

The AMS servers 200 and 210 include media content 130, 132 and 134 and media content 136 and 138, respectively. Preferably, the media content 130, 132, 134, 136 and 138 comes from media content sources 103, 104, 105, 106 and 107 (not shown), respectively. However, nothing prevents the media content 130, 132, 134, 136 and 138 from being provided by another source. Because of the media redirect sub-system 120, the AMS servers 200 and 210 communicate directly with the web client 170. The system 100" is shown after a single media content 130' has been selected for display using the live media index menu on the display 171. The AMS server 200 can thus provide media content 130 to the live standard index frame 140'. The AMS server 200 provide the media content 130 to the web client 170 without requiring the web client 170 to have additional software or plug-ins installed. The layout of the live media index menu when one live standard frame 140' is used, including the position of the live standard index frames 140'. Thus, the system 100" can allow the web client 170 to display a menu through the media index server 110' and AMS servers 200 and 210.

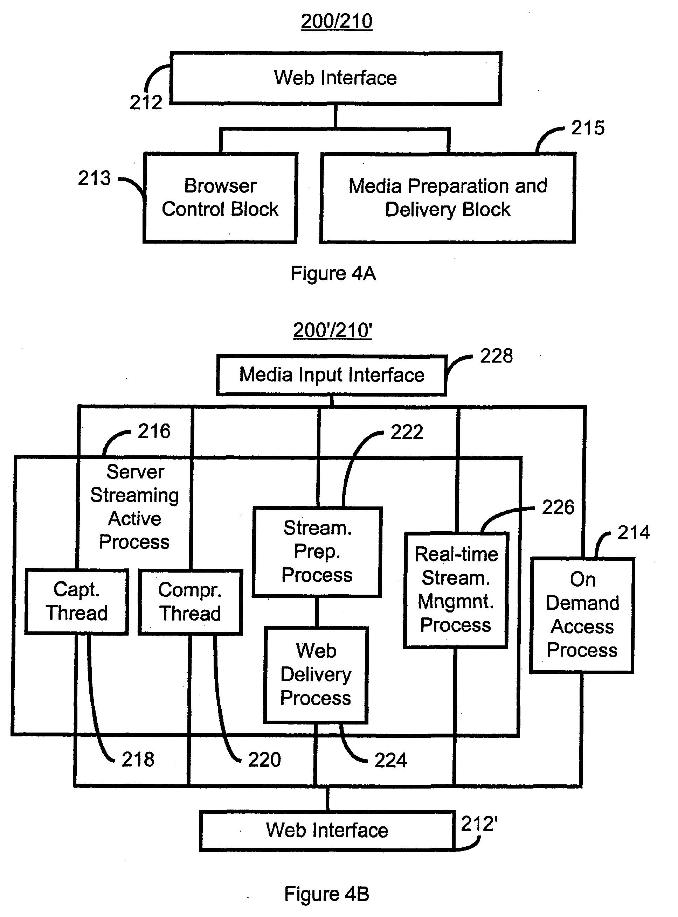

- In order to more particularly describe the present invention, refer to Figures 4A through 4C which depict embodiments of the AMS server 200 or 210 in accordance with the present invention. The AMS servers 200 or 210, as well as the web clients 170 are described more fully in co-pending U.S. Patent Application serial no. entitled "ADAPTIVE MEDIA STREAMING SERVER FOR PLAYING LIVE AND STREAMING MEDIA CONTENT ON DEMAND THROUGH WEB CLIENT'S BROWSER WITH NO ADDITIONAL SOFTWARE OR PLUG-INS" filed on and assigned to the assignee of the present invention. Applicant hereby incorporates by reference the above-identified co-pending patent application.

Figure 4A is a more detailed block diagram of one embodiment of the AMS server 200 or 210. The AMS server 200 or 210 include a web interface 212 for communication via the network 102. The AMS server 200 or 210 includes a media preparation and delivery block 215. The media preparation and delivery block 215 aids in preparing the media content and delivering the media content to the network 102 to be provided to the web client 170 depicted in Figure 1. Referring to Figures 1 and 4A, the media preparation and delivery block 215 preferably divides the media content into sections which the browser 172 can display and delivers the media content section by section to the network 102 and, therefore, to the web client 170. For example, in a preferred embodiment, for video, the media preparation and delivery block 215 divides the media content into frames, compresses each frame using a standard such as JPEG, and delivers the video JPEG file (frame or section) by JPEG file (frame or section) to the web client 170. Also in a preferred embodiment, the media preparation and delivery block 215 provides an abort command between each section of the media content. The AMS server 210 also includes a browser control block 213 for ensuring that the browser 172 of the web client 170 is capable of playing media content in real time without requiring the installation of additional software or plug-ins. Referring to Figures 1 and 4A, in a preferred embodiment, the browser control block 213 ensures that the web client 170 is capable of flushing sections of media content from the cache 174 such that the media content can to be played in real time. In a preferred embodiment, the browser control block 213 ensures that the browser 172 does not cache data. Thus, when the browser 172 receives an abort command, then receives the next section of data, the browser 172 will not attempt to use data in the cache 174 in displaying the next section of data. In other words, the cache 174 will be flushed between sections of media content provided by the AMS server 200 or 210. As a result, the browser 172 will display the media content section by section and flushing the cache between sections, thereby allowing for real-time playing of the media content.

Figure 4B depicts a more detailed block diagram of one embodiment of the AMS server 200' or 210'. The AMS server 200' or 210' includes a media input interface 228. The media input interface 228 allows the AMS server 200' or 210' to receive media from input sources. For example, the AMS server 200' or 210' could receive live video from media content sources 106 and 107 or 103, 104 and 105, respectively, depicted in Figure 1. Referring to Figures 1 and 4B, the AMS server 200' or 210 also includes a server streaming active (SSA) process 216. The SSA process 216 handles the streaming of media content, such as video and audio. Thus, portions of the SSA process 216 may be considered to be analogous to the media preparation and delivery block 215 depicted in Figure 4A. Referring back to Figures 1 and 4B, the SSA process includes a capture thread 218, a compression thread 220, a streaming preparation process 222, a web delivery process 224 and a real-time streaming management process 226. The capture thread 218, compression thread 220, streaming thread 222 and web delivery process 224 are active in parallel, but are interlocked so that the sections of the media content for which streaming is performed are in the desired order. Thus a particular portion of the media content is captured, compressed, undergoes streaming, then undergoes delivery in that order. The real-time streaming management process 226 ensures that the remaining processes 218, 220, 222 and 224 can be performed simultaneously and in the proper order.

The AMS server 200' or 210' also includes an on demand access process 214. The on demand access process 214 ensures that the SSA process 216 becomes active when the web client 170 requests media content from the AMS server 200' or 210'. The on demand access process 214 also ensures that the SSA process 216 remains active throughout delivery of the media content. Moreover, in one embodiment, the one demand access process 214 ensures that the web client 170 can adequately flush the cache 174, as discussed below, so that the browser 170 can play the media content from the AMS server 200' or 210' in real-time without the installation of additional software or plug-ins. Thus, a portion of the on demand access process 214 is analogous to the browser control block 213.

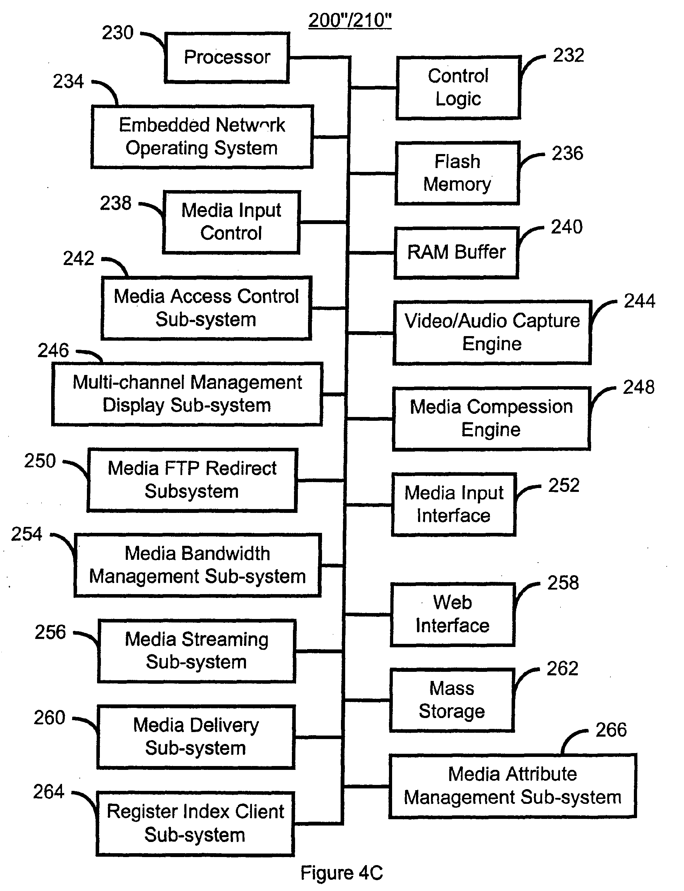

Figure 4C is a block diagram of another embodiment of an AMS server 200" or 210" in accordance with the present invention. The AMS server 200" or 210" includes a processor 230, control logic 232, an embedded network operating system 234, a flash memory 236, a media control input 238, a RAM buffer 240, a media access control sub-system 242, a video/audio capture engine 244, a multi-channel management display sub-system 246, a media compression engine 248, a media file transfer protocol (FTP) re-direct sub-system 250, a media input interface 252, a media bandwidth management sub-system 254, a media streaming sub-system 256, a web interface 258, a media delivery sub-system 260, an optional mass storage 262, a register index client sub-system 264 and a media attribute management sub-system 266.

The AMS server 200" or 210" is preferably capable of substantially the same functions as the AMS servers 200 or 210 and 200' or 210'. Thus, the AMS server 200" or 210" is capable of delivering media content to the web client 170 via the network 102 depicted in Figure 1. Referring to Figures 1 and 4C, the AMS server 200" or 210" is capable of controlling the web client 170 so that the web client 170 can flush the cache 174 rapidly enough to allow the media content to be played on the web client 170 in real time. In particular, the AMS server 200" or 210" provides the media content to the web client 170 section by section and ensures that the web client 170 is capable of flushing the cache 174 after each section is delivered.

The media content could be stored in the optional mass storage 262 or provided from media sources 104, 106 and 108 via the media input interface 252. The video/audio capture engine 244, the media compression engine 248, the media streaming sub-system 256 and the media delivery sub-system 260 handle capture, compression, streaming and delivery for streaming video/audio for the AMS server 200" or 210". Preferably, video is compressed frame by frame using JPEG by the media compression engine 248. The register index client subsystem 264 controls registration and tracking of clients that are allowed to obtain media content from the AMS server 200" or 210'. The media input control 238 controls the media input devices, such as the media content sources 104, 106 and 108. The media access control sub-system 242 performs administration as well as client authentication and authorization. Thus, access to the media for the AMS server 200" or 210" may be controlled by a password or other similar mechanism. The multi-channel management display sub-system 246 performs real-time live index menu and channel management. The media FTP re-direct subsystem 250 can re-target or re-direct media to other uniform resource locators (URLs) using FTP. The media bandwidth management subsystem 254 can perform real-time bandwidth detection and adaptive media attribute delivery according to the client bandwidth. Thus, the AMS server 200" or 210" can dynamically adapt to the bandwidth of the client 170. The media attribute management sub-system 266 can perform real-time media quality control and media size adjustment automatically for the AMS server 200" or 210". In another embodiment, image quality and frame size could be adjusted by an administrator.

The AMS servers 200 or 210, 200' or 210' and 200" or 210" can thus provide media content to the web client 170 on demand and allow the web client 170 to display the media content in real-time without additional software or plug-ins. The AMS servers 200 or 210, 200' or 210' and 200" or 210" can perform media streaming, including capture, compression, streaming and delivery. In addition, if capture and compression functions are not used and media delivered from sources, such as the media content sources 104, 106 and 108 instead of from another source, such as the optional mass storage 262, the AMS servers 200 or 210, 200' or 210' and 200" or 210" simply provide media on demand. Referring to Figures 1, 4A, 4B and 4C, as discussed above, the AMS servers 200 or 210, 200' or 210' and 200" or 210" perform their functions in part by providing the media content section by section to the web client 170. In addition, the AMS servers 200 or 210, 200' or 210' and 200" or 210' control the web client 170 to ensure that the cache 174 can be flushed between each section of the media content played.

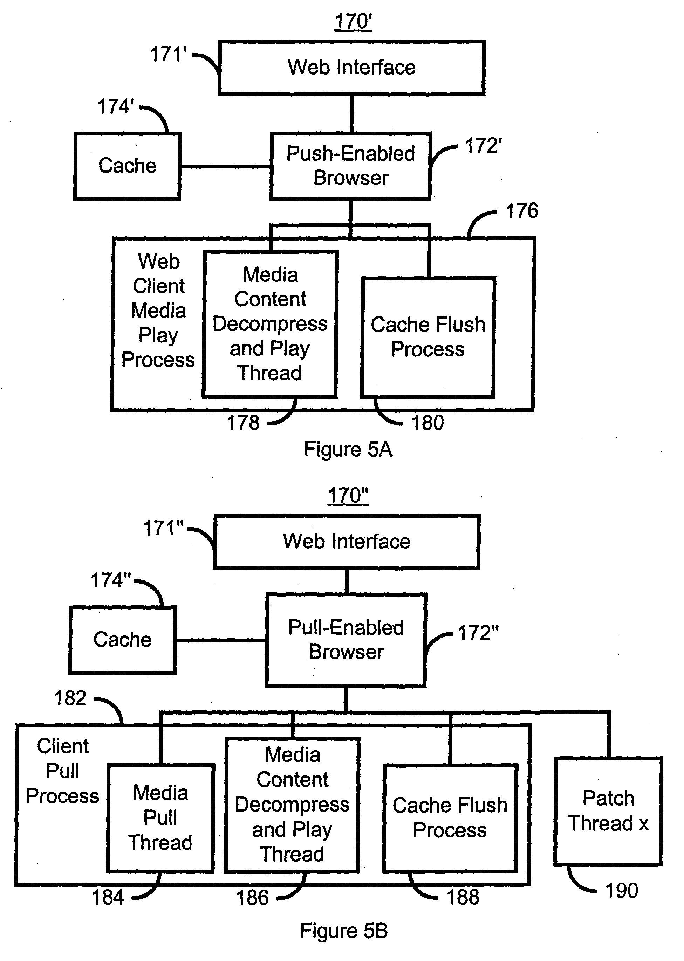

Figure 5A depicts one embodiment of a web client 170' in accordance with the present invention. The web client 170' is used when the AMS servers 200 and 210 are utilized in the system 100, 100' or 100". The web client 170' includes a web interface 171', a browser 172', a cache 174' and a web client media play process 176. Referring to Figures 1 and 5A, the web interface 171' allows the web client 170' to be coupled with a network 102, which could be the Internet. The cache 174' allows the browser 172' to cache data. The browser 172' is a push-enabled browser. Thus, the browser 172' receives data from the network when the data is pushed from the source to the browser 172'.

The web client media play process 176 aids in allowing the push-enabled browser 172' to play media content in real time without additional software or plug-ins being installed. The web client media play process 176 includes a media content decompress and play thread 178 and a cache flush thread 180. The media content decompress and play thread 178 decompresses and plays a section of the media content pushed to the web client 170' by the AMS server 200 or 210, 200' or 210' and 200" or 210". The media content is broken into sections by the AMS server 200 or 210, 200' or 210' or 200" as discussed below. The cache flush thread 180 flushes the cache 174'. In particular, the web client 170' receives a section of media content from the AMS server 200 or 210, 200' or 210' or 200" or 210". The web client 170' decompresses and plays the section on the browser 172' using the media content decompress and play thread 178. However, as discussed above, the section provided by the AMS server 200 or 210, 200' or 210' and 200" or 210" can be decompressed and played by a conventional browser. For example, the section may be a frame of video data compressed using JPEG. The cache flush thread 180 flushes the cache 174' after each section is played by the push-enabled browser 172'. Thus, the browser 172' plays a section, the cache 174' is flushed, the browser 172' plays the next section, and so on. The cache flush thread 180 and media content decompress and play thread 178 function in this manner because of information provided by the AMS server 200 or 210, 200' or 210' or 200" or 210", as discussed below.

Figure 5B depicts another embodiment of a web client 170" in accordance with the present invention. The web client 170" is used when the AMS servers 200 and 210 are utilized in the system 100, 100' or 100". The web client 170" includes a web interface 171", a browser 172", a cache 174", a client pull process 182 and a patch thread x 190. Referring to Figures 1 and 5B, the web interface 171" allows the web client 170" to be coupled with a network 102, which could be the Internet. The cache 174" allows the browser 172" to cache data. The browser 172" is a pull-enabled browser. Thus, the browser 172" receives data from the network when the data is pulled by the web client 170" from the source to the browser 172".

The client pull process 182 aids in allowing the pull-enabled browser 172" to play media content in real time without additional software or plug-ins being installed. The client pull process 182 includes a media pull thread 184, media content decompress and play thread 186 and a cache flush thread 188. The media pull thread 184 pulls sections of the media content from the AMS sever 200 or 210, 200' or 210' and 200" or 210". The media data pulled by the media thread 184 is broken into sections by the AMS server 200 or 210, 200' or 210' and 200" or 210" as discussed below. The media content decompress and play thread 186 decompresses and plays the media content pulled by the web client 170" from AMS server 200 or 210, 200' or 210' and 200" or 210". The cache flush thread 188 flushes the cache 174". In particular, the web client 170" pulls a section of media content from the AMS server 200 or 210, 200' or 210' or 200" or 210" using the pull thread 184. The web client 170" decompresses and plays the section using the media content decompress and play thread 186. However, as discussed above, the section provided by the AMS server 200 or 210, 200' or 210' and 200" or 210" can be decompressed and played by a conventional browser. For example, the section may be a frame of video data compressed using JPEG. The cache flush thread 188 flushes the cache 174" after each section is played by the pull-enabled browser 172". Thus, the client pull process 182 pulls the section, the video/audio thread 184 decompresses the section and plays the section on the browser 172", the cache 174"is flushed, the client pull process 182 pulls the next section, and so on. The cache flush thread 188 and media content decompress and play thread 186 function in this manner because of information provided by the AMS server 200 or 210, 200' or 210' or 200" or 210", as discussed below, and because of the patch thread x 190.

In order to properly flush the cache 174", the patch thread x 190 is used in the pull-enabled browser 172". The patch thread x 190 is provided by the AMS server 200 or 210, 200' or 210' or 200" or 210" without requiring installation of additional software or plug-ins. The pull-enabled browser 172" generally includes a JAVA™ virtual machine. The release of resources, for example of the flushed cache 174", is typically accomplished using a low priority background thread. However, the media content decompress and play thread 186 has a high priority. Thus, without the patch thread x 190, the resources will not be able to be released by low priority threads to after the cache 174" is flushed. In other words, the priority of the media content decompress and play thread 186 may not allow low priority threads to be serviced. Consequently, the web client 170" may crash. The patch thread x 190 allows the low priority threads to be serviced, as discussed below. In particular, the patch thread x 190 allows the media content decompress and play thread 186 to be interleaved with the lower priority threads. Thus, the cache 174" can be flushed between sections of media content, as discussed below, and resources released without crashing the web client 170".

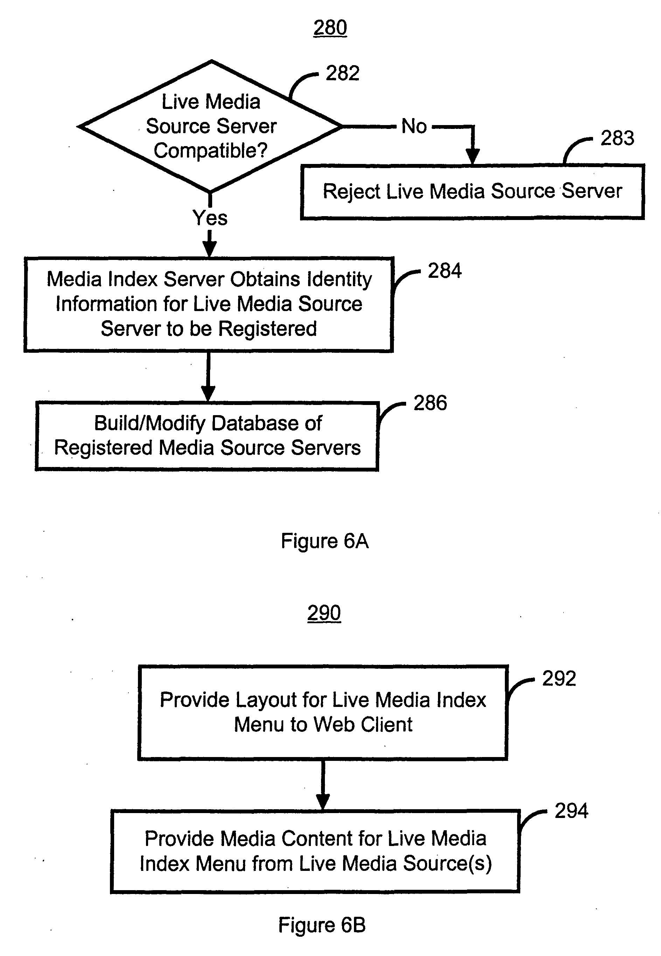

Figure 6A is a high-level flow chart of one embodiment of a method 280 for registering media sources, such as the servers 200 and 210, with the media index server 110, 110' or 110". The method 280 can be used with the AMS servers 200 or 210, 200' or 210' and 200" or 210" and the web clients 170, 170' and 170". In addition, the method 280 could be used with other systems (not shown). For clarity, the method 280 will be described using the AMS servers 200 and 210, the media index server 110 and the web client 170 depicted in Figure 1. However, the method 280 could be used with another number of live media source servers 200 and 210, other live media sources, other media index servers or other web clients. In one embodiment, the servers 200 and 210 are AMS servers.

The method 280 commences after a live media source server to be registered logs onto the media index server 110. It determined whether a live media source server, such as the servers 200 and 210, to be registered is compatible with the media index server 110, via step 282. If the live media source server is compatible, then the method continues. Otherwise, the live media source server is rejected, via step 283. If the live media source server is compatible, then the media index server 110 obtains identity information for the live media source server to be registered, via step 284. For example, step 284 may include receiving the address of the server 200 or 210. The database of registered live media source servers is then altered or built to include the live media source server, via step 286. In a preferred embodiment, step 286 includes checking to determine whether the database includes a record for the live media source server being registered, adding a record if one does not exist and providing a menu, described above with respect to Figure 2A, for altering the record if the record does exist.

Figure 6B is a high-level flow chart of one embodiment of a method 290 for allowing a client to play a live media index menu using the media index server 110, 110' or 110". The method 290 can be used with the servers 200 or 210, AMS servers 200' or 210' and 200" or 210" and the web clients 170, 170' and 170". In one embodiment, the servers 200 and 210 are AMS servers. In addition, the method 290 could be used with other systems (not shown) or servers. For clarity, the method 290 will be described using the AMS servers 200 and 210, the media index server 110 and the web client 170 depicted in Figure 1. However, the method 290 could be used with another number of servers 200 and 210, other live media source servers or servers, other media index servers or other web clients.

The media index server 110 provides a layout for the live media index menu to the web client 170, via step 292. Step 292 is preferably performed in response to the web client 170 requesting the live media index menu from the media index server 110. Thus, in one embodiment, the web client 170 demands the live media index menu including the media content from the media index server 110 through the network 102. Thus, bandwidth for the web client 170 is saved by providing the live media index menu, including the layout and media content, to the web client 170 only in response to a demand by the web client 170. The layout preferably includes live frames or at least one live standard frame in which the media content is to be displayed. The media content to be played in the live media index menu is preferably video or audio.

The media content to be played in the layout is provided to the web client 170 for playing on the web client, via step 294. In a preferred embodiment, step 294 is performed by redirecting the web client 170 to the live media source servers. Thus, step 294 is preferably performed using the media redirect subsystem 120 and the identity information for the live media source servers. The media content is, therefore, provided directly from the live media source servers to the web client 170 in the appropriate frame(s) of the layout. This media content can be from a plurality of live media source servers, including but not limited to the servers 200 and 210: Preferably, these live media source servers are those registered as discussed with respect to the method 280. Using the method 290, therefore, the live media index menu including the media content for each frame can be played on the web client 170, preferably using the web client's browser 172. If the live media source servers are the AMS servers 200 and 210, then the web client 170 is capable of playing the media content without additional software of plug-ins.

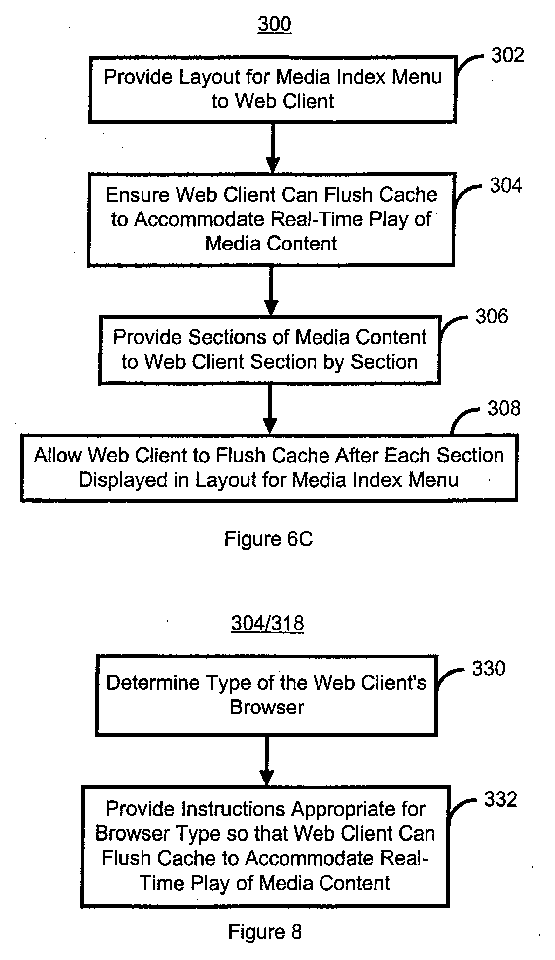

Figure 6C depicts one embodiment of a method 300 for allowing a web client to play a live media index menu in real time without the installation of additional software. The method 300 can be used with the AMS servers 200 or 210, 200' or 210' and 200" or 210" and the web clients 170, 170' and 170". In addition, the method 300 could be used with other systems (not shown). For clarity, the method 300 will be described using the AMS servers 200 and 210, the media index server 110 and the web client 170 depicted in Figure 1. However, the method 300 could be used with another number of AMS servers 200 and 210, other live media source servers, other media index servers or other web clients. Preferably, the method 300 is used with the AMS servers 200 and 210.

Referring to Figures 1 and 6C, the layout for the live media index menu is provided from the media index server 110 to the web client 170, via step 302. Step 302 is preferably performed in response to the web client 170 requesting the live media index menu from the media index server 110. Thus, in one embodiment, the web client 170 demands the live media index menu including the media content from the media index server 110 through the network 102. Thus, bandwidth for the web client 170 is saved by providing the live media index menu, including the layout and media content, to the web client 170 only in response to a demand by the web client 170. The layout preferably includes live frames or at least one live standard frame in which the media content is to be displayed. The media content to be played in the live media index menu is preferably video or audio.

It is ensured that the web client 170 can flush the cache 174 such that real-time play of the media content can be achieved in the layout, via step 304. Preferably step 304 is performed by the AMS servers 200 and 210. Step 304 is preferably performed by the media index server 110 redirecting communication so that the AMS servers 200 and 210 can communicate directly with the web client 170. In one embodiment, step 304 includes indicating to the browser 172 that the sections, discussed below, have a size greater than the actual size of the sections. In one embodiment, step 304 also includes ensuring that the cache 170 can be flushed in real time after each section is displayed. In a preferred embodiment, these portions of step 304 are performed using the AMS servers 200 and 210.

Sections of the media content to be played in the live media index menu are provided section by section to the web client 170, via step 306. Preferably step 306 is performed using the AMS servers 200 and 210. Thus, the AMS server 210 preferably breaks the media content into sections, prepares the sections for delivery to the web client 170 and delivers the sections to the web client 170 through the network 102 in order. The sections are such that the browser 172 can display each section in the layout without requiring the installation of additional software or plug-ins. The browser 172 preferably plays media content in the corresponding live index frame or live standard frame. In one embodiment, step 306 includes capture, compression, streaming and delivery of the media content. For video content, step 306 preferably separates the video into frames and compresses the frames using JPEG. Thus, each section is a JPEG compressed framed.

The web client 170 is allowed to flush sections from the cache after each section is played in the layout, via step 308. Thus, using the method 300, the media content is provided to the web client by sections. The media content is preferably provided section by section for each live or live standard frame to be displayed in the layout. The browser can then display each section of media content and the cache can be flushed after the section is displayed. The browser is capable of displaying each section of media content without the installation of additional software or plug-ins. Thus, using the method 300, a section is provided to the web client 170 for each live frame or live standard frame in the layout. The section is then displayed in the appropriate live frame or live standard frame by the browser 172. In one embodiment, the section is both decompressed and displayed. The web client 170 can also flush the cache 174 between display of sections. Thus, the web client 170 is tricked into behaving as though media content is not being delivered and displayed in real time. Instead, the web client 170 and the browser 172 behave as though only a section of the media content is being displayed in each live frame or live standard frame. In one embodiment, where the web client 170 is informed that the size of the section is greater than the actual size of the section, the web client 170 behaves as though the browser 172 is displaying the same section repeatedly. In addition, the cache is flushed between sections to ensure that a different section is displayed by the browser 172 each time. Thus, the web client is able to play the media content provided over the network 102 without the installation of additional software or plug-ins.

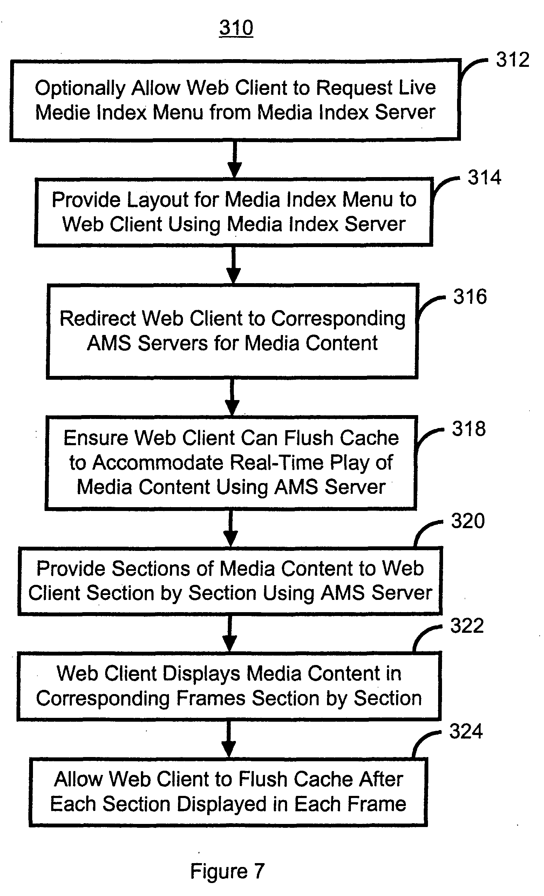

Figure 7 depicts a more detailed flow chart of a method 310 in accordance with the present invention for allowing a web client to play a live media index menu in real time without the installation of additional software. The method 310 can be used with the servers 200 or 210, the AMS servers 200 or 210, 200' or 210' and 200" or 210" and the web clients 170, 170' and 170". In addition, the method 310 could be used with other systems (not shown). For clarity, the method 310 will be described using the servers 200 and 210 as AMS servers, the media index server 110 and the web client 170 depicted in Figure 1. However, the method 310 could be used with another number of AMS servers 200 and 210, other servers, other media index servers or other web clients.

Referring to Figures 1 and 7, the web client 170 requests the live media index menu from the media index server 110, via step 312. Thus, in one embodiment, the web client 170 demands the live media index menu including the media content from the media index server 110 through the network 102. Thus, bandwidth for the web client 170 is saved by providing the live media index menu, including the layout and media content, to the web client 170 only in response to a demand by the web client 170. The layout for the live media index menu is provided from the media index server 110 to the web client 170, via step 314. The layout preferably includes live frames or at least one live standard frame in which the media content may be displayed. The media content to be played in the live media index menu is preferably video or audio.

The media index server 110 redirects the web client 170 to the addresses of the AMS servers 200 and 210 which are used to provide the media content to be played in the live media index menu, via step 316. The AMS servers 200 and 210 ensure that the web client 170 can flush the cache 174 such that real-time play of the media content can be achieved in the layout, via step 318. In one embodiment, step 318 includes indicating to the browser 172 that the sections, discussed below, have a size greater than the actual size of the sections. In one embodiment, step 318 also includes ensuring that the cache 170 can be flushed in real time after each section is displayed.

The AMS servers 200 and 210 provide sections of the media content to be played in the live media index menu section by section to the web client 170, via step 320. Thus, the AMS server 210 preferably breaks the media content into sections, prepares the sections for delivery to the web client 170 and delivers the sections to the web client 170 through the network 102 in order. The sections are such that the browser 172 can display each section in the layout without requiring the installation of additional software or plug-ins. The browser 172 preferably plays media content in the corresponding live index frame or live standard frame. In one embodiment, step 320 includes capture, compression, streaming and delivery of the media content. For video content, step 320 preferably separates the video into frames and compresses the frames using JPEG. Thus, each section is a JPEG compressed framed.

The web client 170 then displays the media content in the corresponding live frames or live standard frames, via step 322. The web client 170 flushes sections from the cache after each section is played in the layout, via step 324. Thus, using the method 310, the media content is provided to the web client by sections. The media content is preferably provided section by section for each live or live standard frame to be displayed in the layout. The browser can then display each section of media content and the cache can be flushed after the section is displayed. The browser is capable of displaying each section of media content without the installation of additional software or plug-ins. Thus, using the method 300, a section is provided to the web client 170 for each live frame or live standard frame in the layout. The section is then displayed in the appropriate live frame or live standard frame by the browser 172. In one embodiment, the section is both decompressed and displayed. The web client 170 can also flush the cache 174 between display of sections. Thus, the web client 170 is tricked into behaving as though media content is not being delivered and displayed in real time. Instead, the web client 170 and the browser 172 behave as though only a section of the media content is being displayed in each live frame or live standard frame. In one embodiment, where the web client 170 is informed that the size of the section is greater than the actual size of the section, the web client 170 behaves as though the browser 172 is displaying the same section repeatedly. In addition, the cache is flushed between sections to ensure that a different section is displayed by the browser 172 each time. Thus, the web client is able to play the media content provided over the network 102 without the installation of additional software or plug-ins.

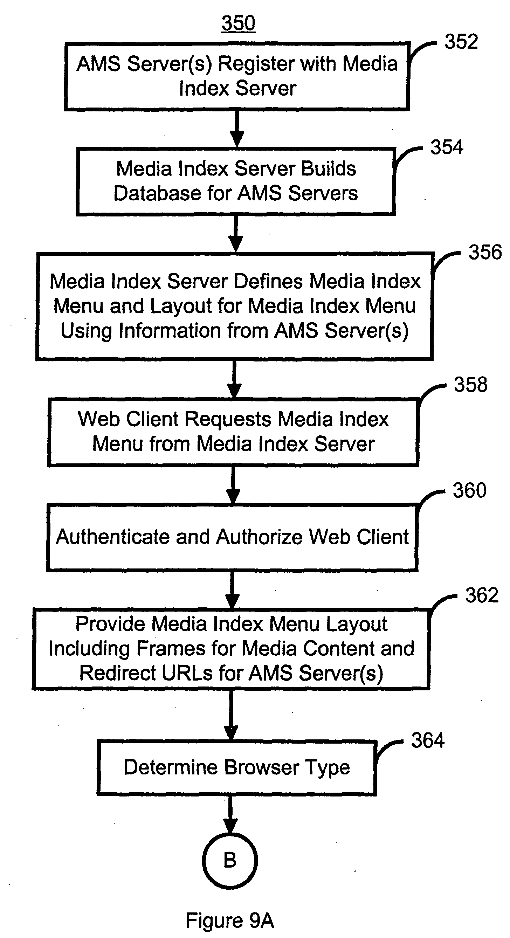

In one embodiment of the method 300 and 310, the step 304 and 318, respectively, ensuring that the web client 170 can flush the cache such that the media content can be played in real time, depends upon the type of browser 172 used. Figure 8 depicts the step 304 or 318 in such an embodiment of the method 300 or 310, respectively. Figure 8 will also be described using Figure 1. The type of the browser 170 is determined by the AMS server 210, via step 330. In one embodiment, step 330 includes receiving information from the web client 170 and determining, based on the information, the type of the browser 170. In another embodiment, this determination can be made using the information in the web client's request for the live media index menu in step 312 of the method 310 of Figure 7. Referring back to Figure 8, the AMS server 210 then provides the web client 170 with instructions which are appropriate for the type of browser 172, via step 332. The instructions allow the web client 170 to flush the cache 174 between sections of the media content.

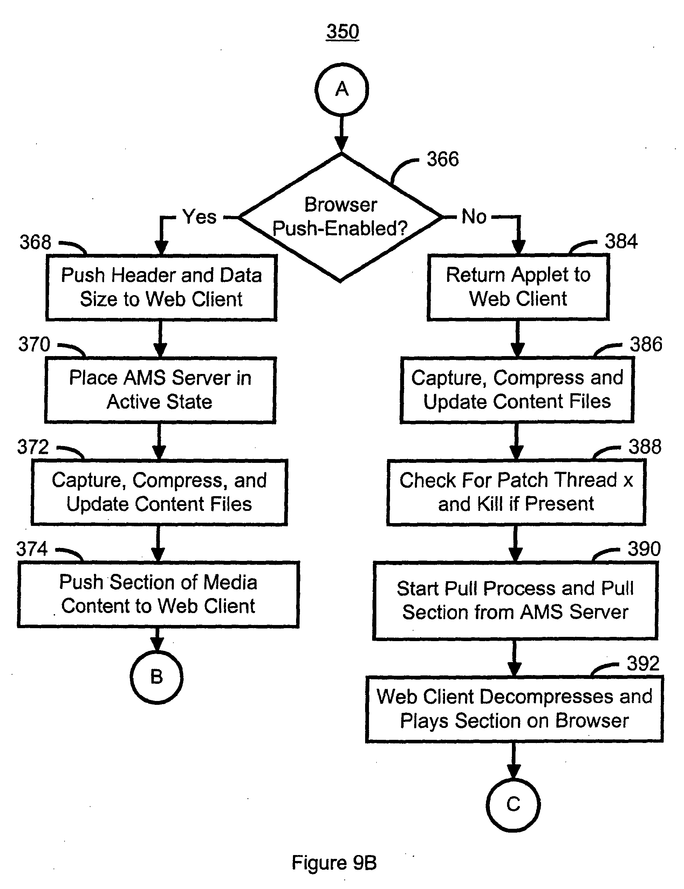

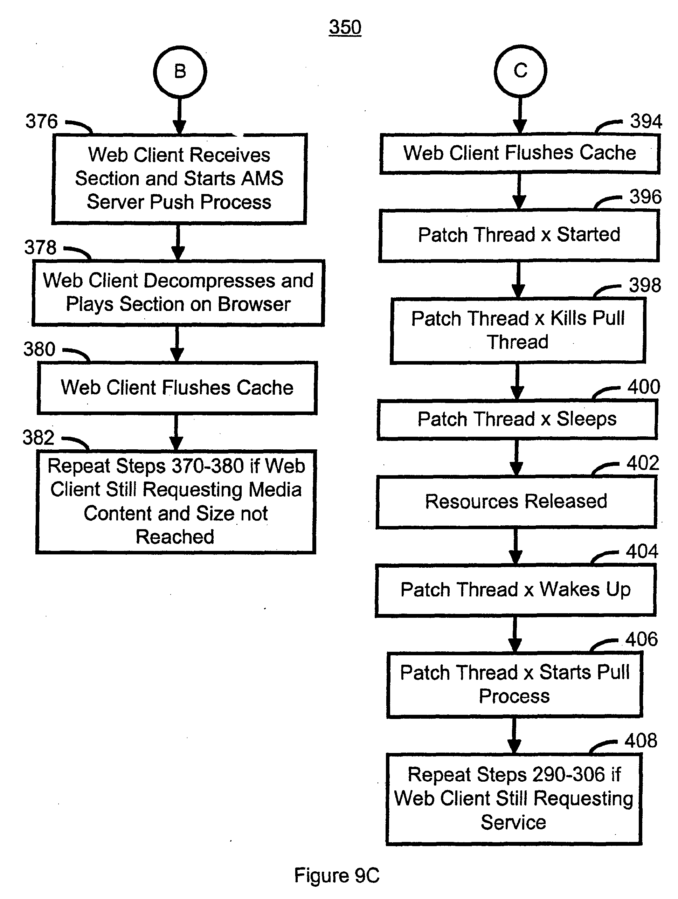

Figures 9A-9C depict a preferred embodiment of a method 350 for allowing a web client to play media content in real time without the installation of additional software. For clarity, the method 350 will be described using the system 100 depicted in Figure 1. However, the method 350 can be used with the AMS servers 200 or 210, 200' or 210' and 200" or 210" as well as the clients 170, 170' and 170". In addition, the method 350 could be used with other systems (not shown). Referring to Figures 9A-C and 1, the AMS servers 200 and 210 register with the media index server 110, via step 352. Thus, the media index server 110 is made aware of the AMS servers 200 and 210, the addresses of the AMS servers 200 and 210 and the media content available through the AMS servers 200 and 210.

The media index server 110 builds a database of the information relating to the AMS servers 200 and 210, via step 354. The media index server 110 preferably utilizes the media register sub-system 118 to perform step 354. The database includes the addresses, preferably URLs, of the AMS servers 200 and 210 and other information relating to the AMS servers 200 and 210. The media index server 110 dynamically defines a live media index menu page using the attributes of the AMS servers 200 and 210 in the database, via step 356. Also in step 356 the media index server 110 defines the layout for the live media index menu. The media index server 110 preferably uses the web server sub-system 114 to perform step 356. Thus, the media index server 110 includes the data required for providing the live media index menu.

The web client 170 requests live media index menu from the media index server 110, via step 358. In a preferred embodiment, step 358 is performed when the web client 170 sends a demand for the live media index menu to the media index server 110 over the network 102 preferably using a URL for the media index server 110. Thus, bandwidth for the web client 170 is saved by providing media content to the web client 170 only in response to a demand by the web client 170. The media source server may then authenticate and authorize the web client 170, via step 360. In step 360, therefore, it is determined whether the web client 170 is the correct web client 170 and ensured that the web client 170 is authorized to obtain a media index menu from the media index server 110.

The media source server 110 authenticates and authorizes the web client 170, via step 360. In step 360, therefore, the media index server 110 determines whether the web client 170 is the correct web client 170 and ensures that the web client 170 is authorized to obtain a live media index menu from the media index server 110.

The media index server 110 then provides the layout of the live media index menu to the web client 170 and redirects the web client 170 to the URLs of the AMS servers 200 and 210, via step 362. Thus, traffic between the web client 170 and the AMS servers 200 and 210 can bypass the media index server 110.

It is determined what type of browser 172 is used by the web client 170, via step 364. In a preferred embodiment, step 364 includes determining whether the browser 172 is a push-enabled browser or a pull-enabled browser based on information provided in the request made in step 358. It is then determined whether the browser 172 is a push-enabled browser, via step 366.

If the browser is a push enabled browser, then the AMS server 210 pushes a header to the web client 170 and indicates to the web client the size of the sections of the media content, via step 368. In a preferred embodiment, the size of the sections and the header are separately provided to the web client. The header is preferably a common gateway interface (CGI) header and is preferably a streaming header which prepares the web client 170 for streaming of the media content. The header preferably instructs the web client 170 not to cache the media content provided by the AMS server 210. Thus, the cache 174 may be flushed between sections of media content, allowing the media content to be played in real time. The size provided to the web client in step 368 is larger than the actual size of the sections of media content. The reason for this is described below.

It is also ensured that the AMS server 110 remains in the active state for providing media content, via step 370. In one embodiment, step 370 ensures that the media preparation and delivery block 215, or the SSA process 216, remains active throughout the time the media content is being provided to the web client 170. Thus, the AMS server 210 will continue to provide its functions related to the media content throughout the time that the media content is being provided to the web client 170. For example, if the AMS server 210 provides streaming media to the web client 170, then step 370 ensures that the AMS server 110 can continue to perform capture, compression, streaming and delivery until the media content has been provided to the web client 170.

If media streaming is to be performed, then the AMS server 210 captures the media content input, compresses the media content and updates content data files, via step 372. Step 372 performs these functions for the media content section by section. As a result, a particular file includes a section of media content that has been compressed. Step 372 also ensures that that the capture, compression and updating functions are interleaved and interlocked so that sections of the media content are captured, compressed and have their data files updated rapidly and in the proper order. If, however, streaming of the media content is not to be performed, then step 372 may include receiving the media content from media sources to allow media on demand to be provided by the AMS server 210.

The AMS server 210 then pushes a section of media content that has been compressed to the web client, via step 374. The section of media content is preferably in a standard file, such as a JPEG file and/or a standard web audio file. Thus, the browser 172 of the web client 170 should be able to play the section of media content pushed in step 374 without the requiring the installation of additional software or plug-ins.

The web client receives the section of media content and preferably commences the web client media play process 176 depicted in Figure 5A, via step 376. The web client 170 decompresses and plays the media content on the browser 172, via step 378. Step 378 is preferably performed using the web client media play process 176 depicted in Figure 5A. However, as discussed above, the section of media content can be decompressed and played on the browser 172 without requiring the installation of additional software or plug-ins. The web client 170 then flushes the cache 174, via step 380. Steps 370 through 380 are then repeated if the web client 170 continues to request the media content and the size of the section provided in step 376 is not met, via step 382. The size of the section is typically not met because the actual size of the section is preferably smaller than the size of the section provided to the web client 170 in step 376. Thus, the web client 170 considers the section of media content pushed to the web client 170 in 374 to be incomplete and continues to request the media content. After the section is displayed in step 378, the cache 174 is flushed in step 380. The next section of media content can then be pushed to the web client 170. The next section will be displayed on the browser 170 without remnants of the previous section because the cache had been flushed. This process of displaying sections of the media content and flushing the cache may continue until the desired media content has been displayed on the push-enabled browser.

If it is determined in step 366 that the browser 170 is not a push-enabled browser, then the browser 170 is a pull-enabled browser, such as the browser 172" depicted in Figure 5B. Referring back to Figures 9A-C and 1, in such an event, the AMS server 210 provides an applet to the web client 170, via step 384. The applet is preferably a JAVA™ applet. The applet preferably includes the patch thread x 190 depicted in Figure 5B, which allows the web client 170 to flush the cache 174. Also in a preferred embodiment, the applet provides the web client 170 with a size of a section of media content. However, as discussed above, the actual size of the section of media content is preferably smaller than the size provided to the web client 170.

The AMS server 210 captures and compresses the media content and updates content files, via step 386. Step 386 performs these functions for the media content section by section. As a result, a particular file includes a section of media content that has been compressed. Step 386 also ensures that that the capture, compression and updating functions are interleaved and interlocked so that sections of the media content are captured, compressed and have their data files updated rapidly and in the proper order. If, however, streaming of the media content is not to be performed, then step 386 may include receiving the media content from media sources to allow media on demand to be provided by the AMS server 210.

The web client 170 then checks to determine whether the patch thread x 190 already exists on the web client 170 and if so, kills the patch thread x 190, via step 388. The web client 170 preferably commences the client pull process 182 depicted in Figure 5B and pulls a section of media content from the AMS server 210, via step 390. Note that commencing the pull process and pulling a section of the media content may also be considered to be two separate steps. The section of media content pulled is preferably in a standard file, such as a JPEG file and/or a standard web audio file. Thus, the browser 172 of the web client 170 should be able to play the section of media content pulled in step 390 without the requiring the installation of additional software or plug-ins.

The web client receives the section of media content, decompresses and plays the media content on the browser 172, via step 392. Step 392 is preferably performed using the client pull process 182 depicted in Figure 5B. However, as discussed above, the section of media content can be decompressed and played on the browser 172 without requiring the installation of additional software or plug-ins. The web client 170 then flushes the cache 174, via step 394.

The web client then starts the patch thread x 190, via step 396. The patch thread x 190 then kills the client pull process 182, via step 398. Killing the client pull process 182 allows lower priority threads for the web client 170 to be serviced and, therefore, the appropriate resources to be released. Consequently, the patch thread x 190 sleeps for an interval and the resources are released, via steps 400 and 402, respectively. The patch thread x 190 then wakes up and starts the client pull process 182, via steps 404 and 406, respectively. A JAVA™ virtual machine is preferably incorporated into the browser 172. As discussed above, the patch thread x is used for JAVA™ virtual machines to allow the lower priority threads to be interleaved with the higher priority client pull process 182 and the appropriate resources released. Consequently, steps 384 through 396 allow flushing of the cache 174 without crashing of the web client 170.

Steps 390 through 406 are then repeated if the web client 170 continues to request the media content, via step 408. The size of the section is typically not met because the actual size of the section is preferably smaller than the size of the section provided to the web client 170 in step 390. Thus, the web client 170 considers the section of media content pulled by the web client 170 to be incomplete and continues to request the media content. This process of displaying sections of the media content, flushing the cache, and releasing of resources may continue until the desired media content has been displayed on the pull-enabled browser.

Using the method 350, therefore, a push-enabled browser, such as the browser 172' depicted in Figure 5A, and a pull-enabled browser, such as the browser 172" depicted in Figure 5B, can be provided with media content via the network 102 for the live media index menu. Note that instead of using the same AMS server 200 or 210, 200 or 210' or 200" or 210" for both browsers 172' and 172", one of the browsers 172' and 172" could be directed to another AMS server (not shown). In such an embodiment, particular AMS servers could be used only for one type of browser, while other AMS servers could be used only for another type of browser. However, the method 350 allows the same AMS server 200 and 210, 200' and 210', 200" and 210" to be used for different types of browsers.

Thus, the system 100, the media index servers 110, 110', and 110", the AMS servers 200 or 210, 200' or 210' and 200" or 210", the web clients 170, 170' and 170" and the methods 300, 310 and 350 allow a live media index menu including media content to be provided to the web clients 170, 170' and 170" over the network 102 and played in real time without requiring additional software or plug-ins. Because additional software or plug-ins need not be installed, the live media index menu including media content can be played on any web client 170, 170' or 170", rather than only those having sufficient resources for the software or plug-ins. For example, media content could be provided to and played on cell phones PDAs, web pads, and thin clients. Thus, fewer resources of a particular web client 170, 170' or 170" are consumed. In addition, the possibility of additional security breaches for web clients 170, 170' and 170" due to the installation of additional software or plug-ins are avoided. In some embodiments, the delivery of media content for the live media index menu can be dynamically updated in response to the available bandwidth for a web client 170, 170' and 170". In addition, the AMS server 200 or 210, 200' or 210' and 200" or 210" may be scalable. Additional sources of media content, such as the media content sources 104, 106 and 108, may be coupled with a particular AMS server 200 or 210, 200' or 210' and 200" or 210" or AMS servers 200 or 210, 200' or 210' and 200" or 210" may be coupled together in order to provide more media content or service more web clients 170, 170' and 170", respectively. Furthermore, a particular AMS server 200 or 210, 200' or 210' and 200" or 210" may be relatively simple to implement. Consequently, the system 100, the AMS servers 200 or 210, 200' or 210' and 200" or 210", the web clients 170, 170' and 170" and the methods 300, 310 and 350 provide many advantages over conventional systems for providing media content to and playing media content on a web client. The media index servers 110, 110' and 110" are also scalable by coupling more AMS servers to the media index servers 110, 110' and 110". In addition, the media content to be played in the live media index menu, for example in live or live standard frames, is redirect to pass directly between the AMS servers 200 or 210, 200' or 210' and 200" or 210" and the web clients 170, 170' and 170", without passing through the media index server 110, 110' or 110". As a result, the bandwidth of the system 100, 100' and 100" may be increased, in some embodiments the bandwidth of the systems 100, 100' and 100" can be increased by at least two times. Furthermore, using the systems 100, 100' and 100" the live media index menu can be expanded or contracted rapidly, as shown in Figures 3A and 3B.

A method and system has been disclosed for providing a live media index menu including media content via a network, such as the Internet or a LAN, to a browser in a web client in real-time, preferably without requiring installation of additional software or plug-ins. Software written according to the present invention is to be stored in some form of computer-readable medium, such as memory, CD-ROM or transmitted over a network, and executed by a processor. Consequently, a computer-readable medium is intended to include a computer readable signal which, for example, may be transmitted over a network. Although the present invention has been described in accordance with the embodiments shown, one of ordinary skill in the art will readily recognize that there could be variations to the embodiments and those variations would be within the spirit and scope of the present invention. Accordingly, many modifications may be made by one of ordinary skill in the art without departing from the spirit and scope of the appended claims.

## Claims

1. A method for providing a live media index menu including media content in real-time on a web client including a browser utilizing a cache, the media content residing on at least one media source, the method comprising the steps of:
(a) providing a layout for the live media index menu to the web client;
(b) providing the media content to the browser of the web client for display in the layout for the live media index menu.

2. The method of claim 1 wherein the media content is provided to the browser of the web client and wherein the browser of the web client is capable of reading and displaying the section of the media content in the layout for the live media index menu in real time without additional software or plug-ins.

3. The method of claim 2 real-time wherein the browser utilizes a cache, wherein the media content is capable of being separated into a plurality of sections, and wherein media content providing step (b) further includes the steps of:
(b1) ensuring that the web client is capable of flushing the cache to allow the media content to be played in real-time in the layout for the live media index menu;
(b2) providing the plurality of sections of the media content to the web client section by section over a network; and
(b3) allowing the web client to flush each section of the media content from the cache in real time once each of the plurality of sections has been displayed section by section in the layout for the live media index menu.

4. The method of claim 1 wherein the live media source is a server, the server having an address and wherein the media content providing step further includes the step of:
(c) redirecting the web client to the address of the server to allow the web client to receive the media content directly from the server.

5. The method of claim 3 wherein the ensuring step (b1) and the plurality of sections providing step (b2) are performed by an adaptive media streaming server.

6. The method of claim 1 further comprising the step of:
(c) registering the at least one media source on a media index server which provides the layout of the live media index menu to the client.

7. The method of claim 1 further comprising the step of:
(c) allowing the web client to request the live media index menu before the live menu providing step (a).

8. The method of claim 3 wherein the browser has a type and wherein the ensuring step (b1) further includes the steps of:
(b1i) determining the type of the browser; and
(b1ii) providing the browser with instructions specific to the type of the browser that allow the web client to flush the cache to allow the media content to be played in real-time.

9. The method of claim 8 wherein the type determining step (b1i) includes the step of:
(b1ia) determining whether the browser is a push-enabled browser or a pull-enabled browser.

10. The method of claim 9 wherein the section has a first size and wherein the instruction providing step (b1ii) further includes the steps of:
(b1iia) indicating to the web client that the browser is not to cache data if browser is a push-enabled browser;
(b1iib) indicating to the web client that section has a second size greater than the first size if the browser is a push-enabled browser;
(b1iic) providing an applet to the web client if the browser is a pull-enabled browser, the applet including a patch thread that allows the web client to flush the cache without crashing the web client.

11. The method of claim 10 wherein the plurality of sections providing step (b3) further includes the steps of:
(b3i) pushing each of the plurality of sections to the web client if the browser is a push-enabled browser, each of the plurality of sections being followed by an abort command;
(b3ii) allowing the web browser to pull each of the plurality of sections section by section if the browser is a pull-enabled browser.

12. The method of claim 3 wherein the plurality of sections providing step (b3) further includes the step of:
(b3i) providing each of the plurality of sections to the web client, each of the plurality of sections being followed by an abort command.

13. The method of claim 3 wherein the plurality sections providing step (b3) further includes the steps of:
(b3i) capturing the media content;
(b3ii) compressing the media content to provide the plurality of sections;
(b3iii) streaming the plurality of sections; and
(b3iv) delivering each of the plurality of sections, each of the plurality of sections being followed by an abort command.

14. The method of claim 1 wherein the media content includes video data and wherein each of the plurality of sections includes a JPEG frame of video data.

15. The method of claim 1 wherein the media content includes audio data.

16. The method of claim 3 wherein the plurality of sections providing step (b3) further includes the step of:
(b3i) adjusting a rate at which the plurality of sections is sent to account for a bandwidth of the web client.

17. A method for providing a live media index menu including media content in real-time on a web client, the media content residing on a live media source, the method comprising the steps of:
(a) requesting the live media index menu using the web client;
(b) receiving a layout for the live media index menu on the web client;
(c) receiving the media content on the web client;
(d) displaying the media content in the layout for the live media index menu.

18. The method of claim 17 wherein the web client includes a browser utilizing a cache, the media content capable of being separated into a plurality of sections, the browser of the web client capable of reading and displaying the section of the media content without additional software or plug-ins, the method further comprising the steps of:
(f) ensuring that the web client is capable of flushing the cache to allow the media content to be played in real-time; wherein the receiving step (c) includes the step of
(c1) receiving each of the plurality of sections of the media content on the web client section by section over a network; and wherein displaying section (d) includes the step of
(d1) displaying each of the plurality of sections section by section in the layout for the live media index menu; and
(d2) flushing each section of the media content from the cache once each of the plurality of sections has been displayed in the layout for the live media index menu.

19. The method of claim 16 wherein the live media source is a server having an address and wherein the method further includes the step of:
(g) allowing the web client to be redirected to the address of the server to allow the web client to receive the media content directly from the server.

20. A method for registering a live media source for providing media content for a live media index menu, the method comprising the steps of:
(a) allowing a live media source to access a live media index server; and
(b) adding the live media source to a database if the live media source has not previously been added to the database.

21. The method of claim 20 further comprising the step of:
(c) allowing a record for the live media source in the database to be altered if the live media source was previously been added to the database.

22. The method of claim 20 further comprising the step of:
(c) determining whether the live media source is compatible with the media index server.

23. The method of claim 20 further comprising the step of:
(c) using the media content from the live media source to provide a live media index menu including the media content to a web client.

24. A system for providing a live media index menu including media content in real-time on a web client, the system comprising:
a media index server for providing a layout for the live media index menu to the web client; and
at least one live media source for providing the media content for the live media index menu.

25. The system of claim 24 wherein the web client includes a browser utilizing a cache, the media content capable of being separated into a plurality of sections, the browser of the web client capable of reading and displaying the section of the media content without additional software or plug-ins, the system further comprising:
means for ensuring that the web client is capable of flushing the cache to allow the media content to be played in real-time in the layout of the media index menu; and
means for providing the plurality of sections of the media content to the web client section by section over a network.

26. The system of claim 25 wherein the browser of the web client is capable of reading and displaying the section of the media content in the layout for the live media index menu in real time without additional software or plug-ins.

27. The system of claim 26 wherein the media index server includes the live media source.

28. The system of claim 24 wherein the live media source is a server having an address and wherein the media index server further includes a media redirect subsystem for redirecting the web client to the address of the server.

29. The system of claim 24 wherein the server is an adaptive media streaming server and further includes an interface for receiving a request for the media content from the web client.

30. The system of claim 25 wherein the ensuring means further includes:
means for determining the type of the browser; and
means for providing the browser with instructions specific to the type of the browser that allow the web client to flush the cache to allow the media content to be played in real-time.

31. The system of claim 25 wherein the live media index server further includes:
a multi-channel management subsystem; and
a media register sub-system for registering each of the at least one live media source.

32. A live media index server for providing a live media index menu including live media content to a web client, the live media index server comprising:
a media register sub-system for registering each of the at least one live media source; and
a multi-channel management sub-system for defining the live media index menu.

33. The live media index server of claim 32 further comprising:
a media redirect sub-system for redirecting the web client to at least one live media source for providing the media content to the web client.

34. The live media index server of claim 32 wherein the media register subsystem further determines whether the live media source is compatible with the media index server.

35. A web client capable of playing a live media index menu including media content in real-time, the media content capable of being separated into a plurality of sections, comprising:
a cache;
a web interface to allow the web client to request the media content, receive a layout for the live media index menu and receive the plurality of sections of the media content section by section over a network;
a browser utilizing a cache, the browser of the web client capable of reading and displaying each of the plurality of sections of the media content in the layout for the media index menu without additional software or plug-ins;
means for ensuring that the web client is capable of flushing the cache to allow the media content to be played in the layout for the live media index menu in real-time, thereby allowing each of the plurality of sections of the media content to be flushed from the cache once each of the plurality of sections has been displayed in the layout for the live media index menu.

36. A computer-readable medium including a program for providing a live media index menu including media content in real-time on a web client including a browser utilizing a cache, the media content residing on at least one media source, the program including instructions for:
(a) providing a layout for the live media index menu to the web client;
(b) providing the media content to the browser of the web client for display in the layout for the live media index menu.

37. A computer-readable medium including a program for providing a live media index menu including media content in real-time on a web client, the media content residing on a live media source, the program including instructions for:
(a) requesting the live media index menu using the web client;
(b) receiving a layout for the live media index menu on the web client;
(c) receiving the media content on the web client;
(d) displaying the media content in the layout for the live media index menu.

38. A computer-readable medium including a program for registering a live media source for providing media content for a live media index menu, the method comprising the steps of:
(a) allowing a live media source to access a live media index server; and
(b) adding the live media source to a database if the live media source has not previously been added to the database.
